# EUROPÄISCHE PATENTSCHRIFT

(11) **EP 0 897 850 B1**
(45) Veröffentlichungstag und Bekanntmachung des Hinweises auf die Patenterteilung: **12.12.2001**
(21) Anmeldenummer: 98114488.4
(22) Anmeldetag: 01.08.1998
(51) Int. Cl.: B62D 1/06

(54) **Bedienelement in einem Kraftwagen**
Control element in a motor vehicle
Elément de contrôle dans un véhicule

(30) Priorität: 18.08.1997 DE 19735834
(43) Veröffentlichungstag der Anmeldung: 24.02.1999
(73) Patentinhaber: DaimlerChrysler AG, 70567 Stuttgart (DE)
(72) Erfinder: Harm, Klaus, 70597 Stuttgart (DE); Schwarz, Thomas, 70376 Stuttgart (DE)

(56) Entgegenhaltungen:
- DE-A- 2 164 976

## Beschreibung

Die Erfindung betrifft ein Bedienelement in einem Kraftwagen gemäß dem Oberbegriff des Anspruches 1.

Aus der DE 21 64 976 A1, die im Oberbegriff des Anspruches 1 berücksichtigt ist, ist ein Bedienelement in Form eines Lenkrades für einen Kraftwagen bekannt; dessen Greifabschnitt am Lenkradkranz über Anschluß- und Zuführungsrohre, die mit den im Fahrzeug vorhandenen Warm- und Kühlluftquellen in Verbindung stehen, Warm- und Kaltluft zugeführt wird, welche über die Lenkradspeichen und den Lenkradkranz in die Fahrgastzelle austreten kann. Hier wird dem Lenkradkranz zur Kühlung oder Erwärmung der Hände des Fahrers entsprechende Luft aktiv zugeführt.

In der DE 37 13 450 A1 ist eine Vorrichtung zum Temperieren von Lenk- und Schalteinrichtungen beschrieben, wo die Heiz- und Kühlenergie in Form von Gas, Flüssigkeit und/oder elektrischer Energie zugeführt wird, wofür in einem geschlossenen Kreislauf oder für eine externe Energiezufuhr Zu- und Abführleitungen zu einer Lenksäule vorgesehen sind.

Auch gemäß einer Ausführung eines Lenkrades in der DE 23 22 484 A1 ist eine aktive Luftzuführung zu einer Lenkradnabe vorgesehen, durch die Frisch- oder Heizluft aus der Prallplatte heraus gegen den Fahrer geblasen wird.

In der US 46 40 340 A1 ist ein Lenkrad mit einem Wärmetauscher beschrieben, von dem aus eine erhitzte oder gekühlte Flüssigkeit in das zentrale Rohr des Lenkradkranzes transportiert werden kann.

In der in der FR 26 82 071 A1 beschriebenen Ausführung eines Lenkrades wird der Peltiereffekt zur Kühlung bzw. zum Heizen eines Lenkrades herangezogen.

Zum allgemeinen Hintergrund der äußerlichen Belüftung von Lenkrädern wird noch auf die Druckschriften US 45 62 957 A1 und US 46 79 730 hingewiesen.

Die Aufgabe der Erfindung besteht darin, zur Belüftung des Greifabschnittes eines Bedienelementes in einem Kraftwagen den Energieverbrauch herabzusetzen.

Die Aufgabe wird durch die kennzeichnenden Merkmale des Patentanspruches 1 gelöst.

Bedienelemente in einem Kraftwagen können sich bei Sonneneinwirkung stark aufheizen, so daß sie in ihrem Greifabschnitt kaum mehr ohne Schmerzen berührt werden können.

Bei sonnenbestrahlten Fahrzeugen stellt sich durch die Sonneneinstrahlung in der Fahrgastzelle vom Fußraum ausgehend (30°C) bis auf Höhe der Lenkradhöhe in etwa eine Temperaturerhöhung von ca. +20°C ein.

Aufgrund des durch die Sonneneinstrahlung oft um über 30°C noch stärker aufgeheizten Bedienelementes kann mit der erfindungsgemäßen Luftführung die Luft aus dem Bedienelement durch ihre geringere Dichte durch die Austrittsöffnungen hindurch in die Fahrgastzelle austreten, und saugt dabei - aufgrund des entstehenden Unterdruckes - die kühlere Luft durch den Luftführungskanal aus dem Fußraum der Fahrgastzelle nach. Aufgrund dieser passiven Belüftung wird der Greifabschnitt des Bedienelementes abgekühlt.

Insbesondere für den Greifabschnitt eines Lenkrades am Lenkradkranz wirkt sich diese passive Belüftung sehr positiv aus, da die gleichmäßige Temperierung der Lenkradkranzoberfläche ein sicheres und angenehmes Umfassen des Lenkradkranzes im Fahrbetrieb gewährleistet.

Diese Wirkung ist insbesondere bei geparktem, durch die Sonne aufgeheiztem Fahrzeug spürbar, wo passiv verhältnismäßig kühle Luft aus dem Fußbodenbereich in das Lenkrad gezogen wird, ohne hierzu elektrischen Strom bzw. ein laufendes Gebläse zu benötigen. Durch eine thermische Isolierung des Luftführungskanales heizt sich die kühle Luft aus dein Fußraum auf ihrem Weg nicht unnötig auf.

Auch bei Einsatz eines Gebläses zum Lufttransport werden in Verbindung mit der passiven Belüftung Vorteile erreicht, da der benötigte Energiebedarf für das Gebläse geringer ist.

Das Abstandsgewirk unter dem luftdurchlässigen Bezug des Bedienelementes ist ebenfalls luftdurchlässig ausgebildet und trennt den Bezug mit der Berührfläche thermisch von dem metallischen, sich stark erwärmenden innenliegenden Gerüst des Bedienelementes. Durch das Abstandsgewirk speichert der Bezug wenig Wärme bzw. Kälte und paßt sich schneller der Handflächentemperatur der greifenden Person an.

Aufgrund der Ausbildung der Zwischenlage als Gewirk, z.B. aus Fäden gewoben, erhält der Bezug von diesem eine hohe, gleichmäßige Luftzufuhr, durch die die Ausströmung am Bezug kaum wahrnehmbar ist. Außerdem kann ein weiches, elastisches Griffgefühl erreicht werden.

Im Abstandsgewirk kann zur Erwärmung des Greifabschnittes des Bedienelementes zusätzlich für den Winter ein Heizdraht eingearbeitet sein, der gegen den Bezug gerichtet eine schnelle Aufheizgeschwindigkeit bei geringer elektrischer Energieaufnahme gewährleistet.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in einer geschnitten Seitenansicht eine Lenksäule in einem Kraftwagen mit einem Luftführungskanal, der Luft aus dem Fußraum zum Lenkrad führen kann;
- Fig. 2: in vergrößerter, geschnittener Darstellung die Ausbildung des Lenkrades, und
- Fig. 3: beispielhaft eine Ausbildung des Abstandsgewirkes.

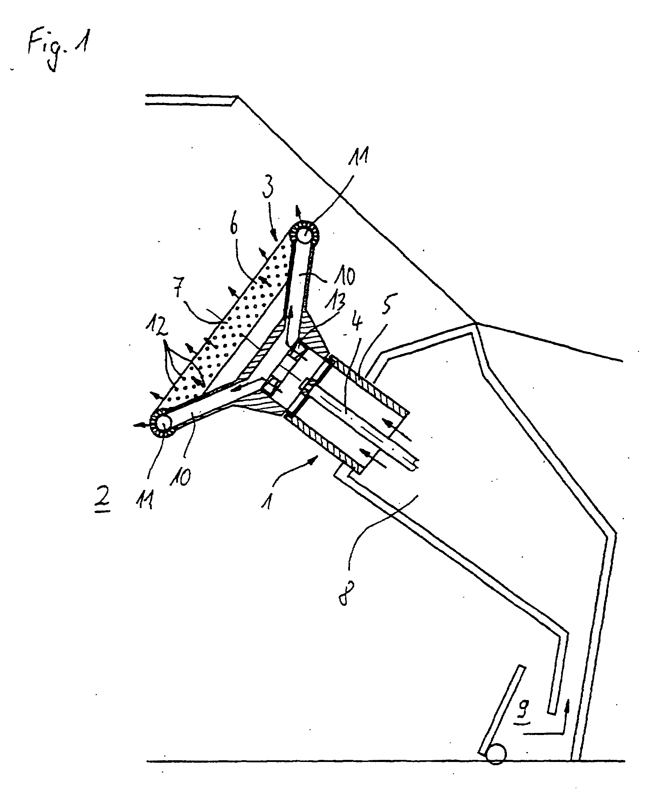

In der Fig. 1 ist eine Lenksäule 1 in einer nicht näher dargestellten Fahrgastzelle 2 in einem Kraftwagen dargestellt. Die Lenksäule 1 umfaßt ein Lenkrad 3 auf einer Lenkspindel 4, welche im obenliegenden Abschnitt von einer Lenkspindelverkleidung 5 umgeben ist.

Das Lenkrad 3 dient für den Fahrer des Kraftwagens als Bedienelement, um über die Drehung der Lenkspindel 4 auf das Lenkgetriebe und die Räder einzuwirken und den Kraftwagen zu lenken. Hierzu sollte der Fahrer einen Lenkradkranz 6 des Lenkrades 3 während der Fahrt mit beiden Händen auf der rechten und linken Seite in gegenüberliegenden Greifabschnitten 7 umgreifen.

Ein Problem besteht darin, daß sich der Lenkradkranz 6 bei starker Sonneneinstrahlung vor allem bei stehendem Fahrzeug stark aufheizen kann, wodurch die entsprechenden Greifabschnitte 7 nur ungern berührt werden. Deshalb weist die Lenksäule 1 eine passive Luftführung gemäß den Pfeilen durch einen Luftführungskanal 8 auf, der im Fußraum 9 der Fahrgastzelle 2 Luft aufnimmt und durch die Lenkspindelverkleidung 5 und durch hohle Streben 10 des Lenkrades 3 in einen hohlen Innenring 11 des Lenkradkranzes 6 führt, wonach sie durch Luftaustrittsöffnungen 12 wieder in die Fahrgastzelle 2 gelangt.

Die Luftaustrittsöffnungen 12 sind dabei derart gestaltet, daß die sich bei Sonneneinstrahlung im Lenkradkranz 6 erwärmende Luft durch ihre Dichte von sich aus durch die Luftaustrittsöffnungen 12 in die Fahrgastzelle 2 strömen kann, wobei durch den dann entstehenden Unterdruck im Lenkradkranz 6 kühlere Luft durch den Luftführungskanal 8 aus dem Fußraum 9 der Fahrgastzelle 2 angesaugt und der Lenkradkranz 6 gekühlt wird, so daß er wieder angenehm greifbar ist. Dieser Kühlvorgang des Lenkrades 3 funktioniert auch bei stehendem Fahrzeug ohne Einsatz von elektrischer Energie. Auch wenn zusätzlich ein Gebläse 13, für einen effektiven Lufttransport im Lenkrad 3 angeordnet ist, wird durch die erfindungsgemäße passive Luftführung eine deutliche Energieeinsparung erreicht. Hilfreich ist es dabei, wenn der Luftführungskanal 8 für die Leitung der kühleren Luft aus dem Fußraum 9 nach außen thermisch isoliert ausgebildet ist.

Durch diese passive Luftführung kühlerer Luft aus dem Fußraum 9 in das aufgeheizte Bedienelement (Lenkrad) 3 wird ein hoher thermischer Komfort an den Greifabschnitten 7 mit geringem technischem Aufwand erreicht, wodurch auch die Fahrsicherheit durch eine angenehme Lenkradtemperatur bei gleichmäßiger, als Luftstrom aber kaum wahrnehmbarer Temperierung erhöht wird.

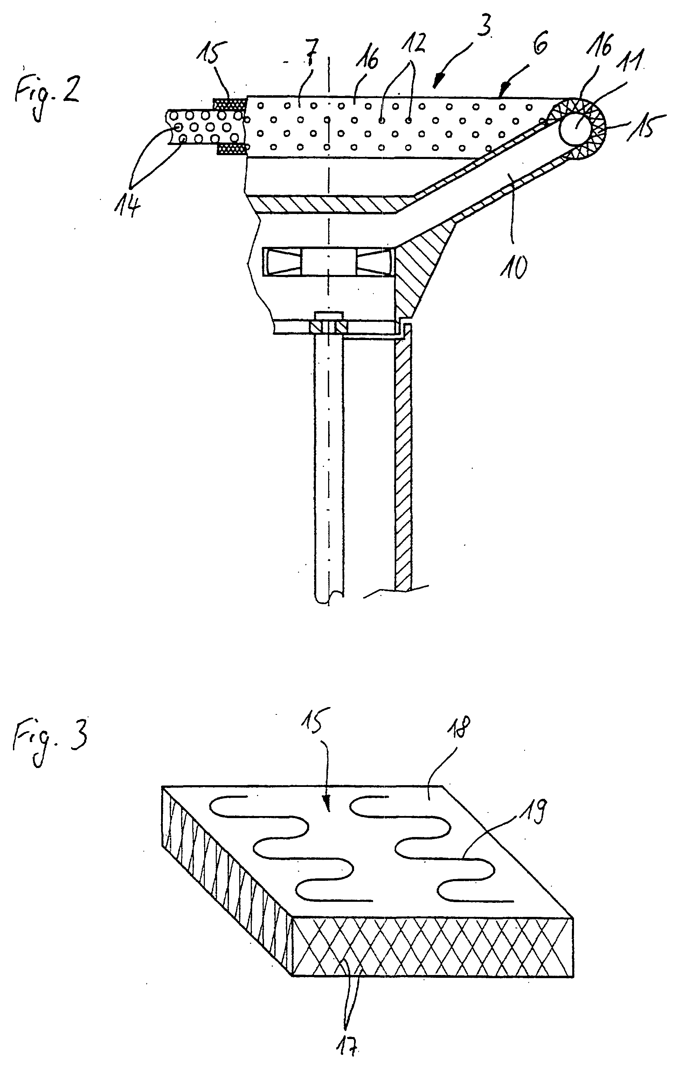

Wie die Fig. 2 deutlicher zeigt, ist das Lenkrad 3 mit hohlen Streben 10 ausgebildet, durch die die angesaugte Luft in den hohlen Innenring 11 des Lenkradkranzes 6 gelangt. Der Innenring 11 weist zahlreiche Durchgangsbohrungen 14 auf und ist von einem Abstandsgewirk 15 umgeben, welches nach außen hin durch einen perforierten Bezug 16 umgeben ist, welcher für den Fahrer die Greifabschnitte 7 des Lenkradkranzes 6 bildet und zahlreiche Luftaustrittsöffnungen 12 aufweist, durch die die Luft in die Fahrgastzelle 2 strömen kann.

In einem Ausbildungsbeispiel gemäß Fig. 3 ist das luftdurchlässige Abstandsgewirk 15 aus elastischen, sich im Querschnitt rautenförmig überkreuzenden Fäden 17 gefertigt, und ist in die gegen den Bezug 16 gerichtete Fläche 18 des Abstandsgewirkes 15 ein elektrischer Heizdraht 19 für die Erwärmung im Winter eingearbeitet.

Durch das Abstandsgewirk 15 ergibt sich ein weiches, elastisches Griffgefühl. Darüber hinaus ist eine gute Durchlüftung, d.h. auch gute Kühlung des Lenkradkranzes 6 gewährleistet, dessen sich stark aufheizender, metallener Innenring 11 vom Bezug 16 weitgehend thermisch entkoppelt ist. Trotz des geringen Gewichtes des Abstandsgewirkes 15 ist es doch torsionssteif und zudem drehfest mit dem Innenring 11 zu verbinden.

## Patentansprüche

1. Bedienelement in einem Kraftwagen, mit einem von einem Insassen greifbaren, hohlen Greifabschnitt, der oberhalb des Fußraumes (9) des Kraftwagens angeordnet und belüftbar mit Luftaustrittsöffnungen (12) versehen ist, an welche Luft durch einen Luftführungskanal (8) herangeführt wird, die durch die Luftaustrittsöffnungen (12) in die Fahrgastzelle (2) ausströmt,
**dadurch gekennzeichnet,**
**daß** der Luftführungskanal (8) im Fußraum (9) der Fahrgastzelle (2) beginnt, und daß aus dem durch Sonneneinwirkung erhitzten Greifabschnitt (7) wärmere Luft von sich aus durch die Luftaustrittsöffnungen (12) in die Fahrgastzelle (2) abströmen kann, und dabei über den entstehenden Unterdruck über den Luftführungskanal (8) aus dem Fußraum (9) kühlere Luft in den Greifabschnitt (7) angesaugt wird.

2. Bedienelement nach Anspruch 1,
**dadurch gekennzeichnet,**
**daß** eine Lenksäule (1) einen Luftführungskanal (8) beginnend im Fußraum (9) der Fahrgastzelle (2) bis in das Lenkrad (2) umfaßt, welches in die Fahrgastzelle (2) führende Luftaustrittsöffnungen (12) aufweist.

3. Bedienelement nach Anspruch 1,
**dadurch gekennzeichnet,**
**daß** das Bedienelement (2) an seiner Oberfläche einen luftdurchlässigen Bezug (16) aufweist, und daß in den Bezug (16) ein luftdurchlässiges Abstandsgewirk (15) eingesetzt ist.

4. Bedienelement nach Anspruch 3,
**dadurch gekennzeichnet,**
**daß** das Abstandsgewirk (15) aus elastischen, sich im Querschnitt rautenförmig überkreuzenden Fäden (17) gefertigt ist.

5. Bedienelement nach Anspruch 3,
**dadurch gekennzeichnet,**
**daß** in die gegen den Bezug (16) gerichtete Fläche (18) des Abstandsgewirkes (15) ein elektrischer Heizdraht (19) eingearbeitet ist.

6. Bedienelement nach Anspruch 1,
**dadurch gekennzeichnet,**
**daß** der Luftführungskanal (8) nach außen thermisch isoliert ausgebildet ist.

7. Bedienelement nach Anspruch 1,
**dadurch gekennzeichnet,**
**daß** der Luftführungskanal (8) eine Verbindung zur Klima- bzw. Heizanlage des Kraftwagens aufweist.

8. Bedienelement nach Anspruch 2,
**dadurch gekennzeichnet,**
**daß** im Lenkrad (3) ein Gebläse (13) angeordnet ist.

## Claims

1. A control in a motor vehicle with a hollow grip section which can be gripped by an occupant which is positioned above the footwell (9) of the motor vehicle and provided with air outlets (12) to permit ventilation to which air is fed through an air supply channel before flowing out into the occupant cell (2) through the air outlets (12),
**characterised in that**
the air supply channel (8) starts in the footwell (9) of the occupant cell (2) and that warmer air is able to flow independently out of the grip section (7) heated by the sun's radiation through the air outlets (12) and into the occupant cell (2), and that due to the underpressure thus generated cooler air is taken from the footwell (9) via the air supply channel (8) and supplied to the grip section (7).

2. A control in accordance with claim 1,
**characterised in that**
a steering column (1) comprises an air supply channel (8) running from the footwell (9) of the occupant cell (2) to the steering wheel (3) which has air outlets leading to the occupant cell (2).

3. A control in accordance with claim 1,
**characterised in that**
the surface of the control (3) is covered by an air permeable cover (16) and that an air permeable fabric spacer (16) is incorporated in the cover (16).

4. A control in accordance with claim 3,
**characterised in that**
the fabric spacer (16) is made of elastic threads (17) which are cross-worked in a lozenge-shaped pattern in cross-section.

5. A control in accordance with claim 3,
**characterised in that**
an electrical resistance wire (19) is incorporated into the surface (18) of the fabric spacer (16) facing the cover (16).

6. A control in accordance with claim 1,
**characterised in that**
the air supply channel (8) is designed such that it is thermally insulated to the exterior.

7. A control in accordance with claim 1,
**characterised in that**
the air supply channel (8) has a connection to the air-conditioning and heating system of the motor vehicle.

8. A control in accordance with claim 2,
**characterised in that**
a fan (13) is positioned in the steering wheel (3).

## Revendications

1. Elément de commande dans un véhicule, comportant une partie creuse de préhension, pouvant être saisie par un passager et qui est disposée au-dessus de l'espace (9) au voisinage du plancher du véhicule et est équipée, de manière à pouvoir être aérée, par des ouvertures de sortie d'air (12), auxquelles est amené, par un canal d'amenée d'air (8), de l'air qui sort par les ouvertures de sortie d'air (12) pour pénétrer dans l'habitacle (2), **caractérisé en ce que** le canal (8) de guidage de l'air commence dans l'espace (9), situé au niveau du plancher, de l'habitacle (2) et que de l'air plus chaud peut s'évacuer de lui-même de la partie de préhension (7) chauffée par le rayonnement solaire, par les ouvertures de sortie d'air (12) pour pénétrer dans l'habitacle (2), et que de l'air plus froid, qui sort de l'espace (9) situé au niveau du plancher en circulant dans le canal d'amenée d'air (8) est aspiré dans la partie de préhension (7) sous l'effet de la dépression qui apparaît.

2. Elément de commande selon la revendication 1, **caractérisé en ce qu'**une colonne de direction (1) comprend un canal (8) de guidage de l'air, qui commence dans l'espace (9) situé au niveau du plancher'de l'habitacle (2) et s'étend jusqu'au volant de direction (2) et qui comporte des ouvertures de sortie d'air (12) débouchant dans l'habitacle (2).

3. Elément de commande selon la revendication 1, **caractérisé en ce que** l'élément de commande (2) comporte sur sa surface un revêtement (16) perméable à l'air et qu'un tricot d'entretoisement (15) perméable à l'air est inséré dans le revêtement (16).

4. Elément de commande selon la revendication 3, **caractérisé en ce que** le tricot d'entretoisement (15) est formé par des fils élastiques (17), qui se croisent en losange en coupe transversale.

5. Elément de commande selon la revendication 3, **caractérisé en ce qu'**un fil de chauffage électrique (19) est inséré dans la surface (18) du tricot d'entretoisement (15), qui est tournée vers le revêtement (16).

6. Elément de commande selon la revendication 1, **caractérisé en ce que** le canal d'amenée d'air (8) est agencé de manière à être isolé théoriquement en direction de l'extérieur.

7. Elément de commande selon la revendication 1, **caractérisé en ce que** le canal d'amenée d'air (8) possède une liaison avec l'installation de climatisation et de chauffage du véhicule.

8. Elément de commande selon la revendication 2, **caractérisé en ce qu'**un ventilateur (13) est disposé dans le volant (3).
